# EUROPEAN PATENT APPLICATION

(11) **EP 3 091 718 A1**
(43) Date of publication of application: **09.11.2016**
(21) Application number: 16165400.9
(22) Date of filing: 14.04.2016
(51) Int. Cl.: H04M 1/663, H04M 1/725, H04M 19/04, H04M 1/654

(54) **INCOMING CALL NOTIFICATION CONTROL SYSTEM DEPENDENT ON LAST CONTENT OF CALL**

(30) Priority: 16.04.2015 JP 2015084400
(71) Applicant: Toyota Jidosha Kabushiki Kaisha, Toyota-shi, Aichi-ken, 471-8571 (JP)
(72) Inventor: SUGIMOTO, Hironobu, Aichi-Ken, Aichi 471-8571 (JP); HOTTA, Norihisa, Aichi-Ken, Aichi 471-8571 (JP); FUKUSHIMA, Toru, Shibuya-ku, Tokyo 150-0022 (JP)
(74) Representative: D Young & Co LLP

(57) **Abstract**

An incoming call notification control system includes a call sending /receiving unit (100) that sends and receives a phone call to and from an operator within a mobile object, a learning unit (103) configured to analyze a content of a past phone call of the operator with a caller via the call sending/receiving unit, determine an attribute of the caller relevant to an importance of phone calls between the operator and the caller, based on a result of the analysis, and store the determined attribute of the caller in a storage unit (DB1), and an incoming call notification controller (101) configured to control execution or non-execution of incoming call notification to the operator, according to the attribute of the caller stored in the storage unit, and a situation in which the operator is placed, when the call sending/receiving unit receives a phone call.

## Description

### BACKGROUND OF THE INVENTION

### 1. Field of the Invention

The invention relates to an incoming call notification control system that controls incoming call notification of telephones.

### 2. Description of Related Art

As one example of this type of incoming call notification control system, an incoming call control device described in Japanese Patent Application Publication No. 2007-116542 (JP 2007-116542 A) is known. When a telephone receives a phone call, this device (system) initially refers to a database, such as a so-called blacklist or whitelist, so as to determine whether a user who is supposed to answer the call should be notified of the incoming call from a caller (the originator of the call). If the call originator is not registered in these lists, the incoming call to a telephone set operated by the user is transferred to an external server, and the external server analyzes the content of a voice message from the caller. If it is determined, as a result of the analysis of the voice message, that the phone call corresponds to an abusive or nuisance call, the telephone number of the call originator is registered in a blacklist, and incoming call notification to the user is restricted. On the other hand, if it is determined that the phone call does not correspond to an abusive or nuisance call, text data indicating the content of the voice message is presented from the external server to the telephone set operated by the user, and the user is urged to select a blacklist or a whitelist in which the call originator is to be registered, and register the call originator in the selected list.

In the meantime, whether or not the user receives a phone call from a caller is normally determined, not simply based on the relationship between the caller and the user, but changes depending on a situation in which the user is placed, for example. Therefore, it is not necessarily an appropriate reaction for the user to uniformly restrict notification of incoming calls from the caller to the user, using a blacklist, or the like, as in the device (system) described in the above-identified publication.

Also, as in the device (system) described in the above publication, the user is urged to select a blacklist or a whitelist in which the caller is to be registered, and register the caller in the selected list, only in the limited case where it is determined, as a result of analysis of the voice message, that the phone call does not correspond to an abusive or nuisance call. Nonetheless, it is still bothersome or troublesome for the user to make the selection and registration as described above. Thus, it is desired to improve the convenience or user-friendliness of the above type of system.

### SUMMARY OF THE INVENTION

This invention provides an incoming call notification control system that can perform incoming call notification control with improved convenience, according to a situation, such as a workload, of an operator as the user.

One aspect of the invention relates an incoming call notification control system that includes a call sending/receiving unit that sends and receives a phone call to and from an operator within a mobile object, a learning unit configured to analyze a content of a past phone call of the operator with a caller via the call sending/receiving unit, and determine an attribute of the caller relevant to an importance of phone calls between the operator and the caller, based on a result of the analysis, the learning unit storing the determined attribute of the caller in a storage unit, and an incoming call notification controller configured to control execution or non-execution of incoming call notification to the operator, according to the attribute of the caller stored in the storage unit, and a situation in which the operator is placed, when the call sending/receiving unit receives a phone call.

According to the above aspect, the incoming call notification control system controls execution or non-execution of incoming call notification to the operator is controlled, while taking account of the attribute relevant to the importance of phone calls between the operator and the caller, which attribute is learned via the learning unit, for example, information as to whether the caller has an official relationship or a private relationship with the operator, and the situation in which the operator is placed when receiving the call. Therefore, the system is able to control execution of incoming call notification, according to the situation, such as a workload of the operator at the time of receipt of the call, without requiring the operator himself/herself to set the attribute, etc. of the caller upon receipt of each call. Thus, the convenience or user-friendliness is naturally improved.

In the above aspect, the learning unit may be configured to store a time period of the past phone call in the storage unit, and the incoming call notification controller may be configured to place different degrees of priority to respective time periods, according to the stored time period, and control execution or non-execution of the incoming call notification, with a degree of priority corresponding to a time period in which the call sending/receiving unit receives the phone call.

With the arrangement as described above, incoming call notification to the operator is controlled, with the urgency of the phone call further taken into consideration. For example, a phone call received from a certain caller is deemed highly urgent when the time period in which the call is received from the caller largely deviates or differs from the time period stored in the storage unit. Namely, incoming call notification is more likely to be executed with respect to an incoming call having high urgency, for example, while the situation in which the operator is placed at the time of receipt of the call is also taken into consideration. Thus, the practicability as well as the convenience is improved.

In the above aspect, the incoming call notification controller may be configured to control execution or non-execution of the incoming call notification such that the incoming call notification is less likely to be performed as the operator is placed in a higher-workload status.

When the operator is placed in a high-workload status, such as when the operator is operating an object to be operated, incoming call notification itself, not to mention the phone call, may cause the operator to feel bothered or disturbed. Thus, with the above arrangement, the operator can be less likely or unlikely to be bothered or disturbed.

In the above aspect, the incoming call notification controller may be configured to determine whether the operator has got out of a high-workload status, and informs the operator that there is a missed incoming call when it is determined that the operator has got out of the high-workload status.

Once the operator gets out of the high-workload status, incoming call notification is less likely or unlikely to cause the operator to feel bothered or disturbed. Thus, with the above arrangement, the convenience or user-friendliness is maintained for the operator who senses the importance of phone calls.

In the above aspect, the learning unit may be configured to analyze the content of the past phone call of the operator, based on a frequency of appearance of words or phrases included in the phone call. Namely, if the relationship between the operator and the caller is different, the words or phrases contained in the phone conversations between the operator and the caller are usually different. Therefore, by analyzing the frequency of appearance of certain words/phrases contained in the phone conversions, it is possible to determine whether the relationship between the operator and the caller is an official relationship, or a private relationship, for example, and thus classify callers based on their attributes.

In the above aspect, the learning unit may be configured to manage the words or phrases used in connection with a relationship between the operator and the caller, along with corresponding evaluation values. The learning unit may be configured to add a corresponding one of the evaluation values each time one of the words or phrases appears in the phone call, and determine the attribute of the caller relevant to the importance of phone calls between the operator and the caller, in the phone call, based on a relative magnitude of a total value of the evaluation values.

With the above arrangement, the attribute of each caller relevant to the importance of phone calls between the operator and the caller is determined in view of a telephone conversation having a certain length of time; therefore, the accuracy in classification of callers based on the attribute, and the learning accuracy, can be further enhanced.

In the above aspect, the learning unit may be classify callers into categories of the attribute relevant to the importance of phone calls between the operator and each of the callers, and further into sub-categories into which the categories are divided based on groups of the callers set in advance, and the incoming call notification controller may control execution or non-execution of incoming call notification to the operator, with different degrees of priority placed on the respective sub-categories established based on the groups.

With the above arrangement, the categories of the attributes relevant to the importance of phone calls between the operator and the caller are further divided into sub-categories, based on information on groups, such as "OFFICE-RELATED" and "FAMILY", of callers set in advance, for example. Namely, the categories of the attributes relevant to the importance of calls between the operator and the caller are divided into sub-categories, using the group information set in advance based on the intention of the operator, for example, in addition to the content of phone calls between the operator and the caller. Then, execution or non-execution of incoming call notification is controlled with different degrees of priority placed on the respective sub-categories thus established, so that the practicability of the system can be further improved.

In the above aspect, the learning unit may classify callers based on the attribute relevant to the importance of phone calls between the operator and each of the callers, in view of at least one of a tone of an operator's voice during a phone call, a behavior of the operator during the phone call, and a biological reaction of the operator during the phone call.

When the tone of the operator's voice is high during a phone call, for example, this means that the operator positively talks with the caller over the phone, or wishes to positively talk with the caller, and the caller is presumed to be a person toward whom the operator has a good feeling. Also, when the operator performs a bowing action during a phone call, it is presumed that the operator shows respect for the caller, and the caller is a person having an official relationship with the operator. Also, when the heart rate of the operator increases during a phone call, the caller is presumed to be a person toward whom the operator feels nervous in the call. Thus, with the above arrangement, the accuracy in classification of callers based on attributes relevant to the importance of phone calls between the operator and the caller, and the learning accuracy, can be further improved.

In the above aspect, the learning unit may store information that the operator refused to answer a phone call from a given caller through an intentional operation of the operator, in the storage unit, in association with the attribute of the given caller. The incoming call notification controller may be configured to restrain execution of incoming call notification to the operator, when the call sending/receiving unit receives a phone call from the caller, under a condition that the attribute of the caller is associated with the information that the operator refused to answer the phone call from the caller.

With the above arrangement, in view of the fact that the operator refused to answer a phone call from a certain caller, execution of subsequent notification of incoming calls from this caller is restrained or inhibited. Namely, execution of incoming call notification to the operator is controlled in view of individual circumstances of the operator.

In the above aspect, the mobile object may be an automobile, and the operator may be a driver of the automobile. The incoming call notification controller may be configured to determine the situation in which the operator is placed, according to a traveling situation or a driving situation of the automobile.

In a driving situation where the driver is driving an automobile, or in a traveling situation where the automobile is traveling in a travel environment in which the driver has a difficulty in driving, the driver is presumed to be in a situation where he/she feels a high workload or burden. Thus, with the above arrangement, incoming call notification control can be performed according to the situation, such as the workload of the driver, based on the result of the determination.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram schematically showing the configuration of an incoming call notification control system as a first embodiment of the invention;
FIG. 2 is a view showing one example of the content of data stored in an attribute determination word/phrase database of the first embodiment;
FIG. 3 is a view showing one example of the content of data stored as incoming call history information in a caller attribute database of the first embodiment;
FIG. 4 is a view showing one example of the content of data stored as incoming call history master information in the caller attribute database of the first embodiment;
FIG. 5 is a view showing one example of the content of data used for detection of the urgency of a phone call, in the incoming call notification control system of the first embodiment;
FIG. 6 is a view showing one example of the content of data stored in an incoming call notification setting table of the first embodiment;
FIG. 7 is a flowchart illustrating a procedure of incoming call notification control routine executed by the incoming call notification control system of the first embodiment;
FIG. 8 is a view showing one example of the content of data stored in an incoming call notification setting table, in an incoming call notification control system as a second embodiment of the invention;
FIG. 9 is a block diagram schematically indicating the configuration of an incoming call notification control system as a third embodiment of the invention;
FIG. 10 is a view showing one example of the content of data stored in an incoming call notification setting table of the third embodiment;
FIG. 11 is a view showing one example of the content of data used for detection of the urgency of a phone call, in an incoming call notification control system as another embodiment of the invention;
FIG. 12 is a view showing one example of the content of data used for detection of the urgency of a phone call, in an incoming call notification control system as another embodiment of the invention; and
FIG. 13 is a view showing one example of the content of data stored in an incoming call notification setting table, in an incoming call notification control system as another embodiment of the invention.

### DETAILED DESCRIPTION OF EMBODIMENTS

An incoming call notification control system as a first embodiment of the invention will be described with reference to the drawings. The incoming call notification control system of this embodiment is a system that controls incoming call notification when a main body of a telephone possessed by a driver (operator) of an automobile (a mobile object) receives a phone call. To control execution/non-execution of incoming call notification, this system classifies callers based on attributes relevant to the importance of phone calls between the driver and the callers. As one example of classification of callers using their attributes, the callers are classified into those having an official attribute and those having a private attribute. Then, the system determines a situation in which the driver is placed, and controls execution/non-execution of incoming call notification, based on a degree of priority set for the attribute of a caller from whom the incoming call is received. The degree of priority used for execution of incoming call notification is set to be variable according to the urgency of the incoming call. Therefore, even under a situation where incoming call notification is normally restrained, the incoming call notification is permitted in case of urgency, for example; thus, incoming call notification is likely to be executed in response to highly urgent incoming calls.

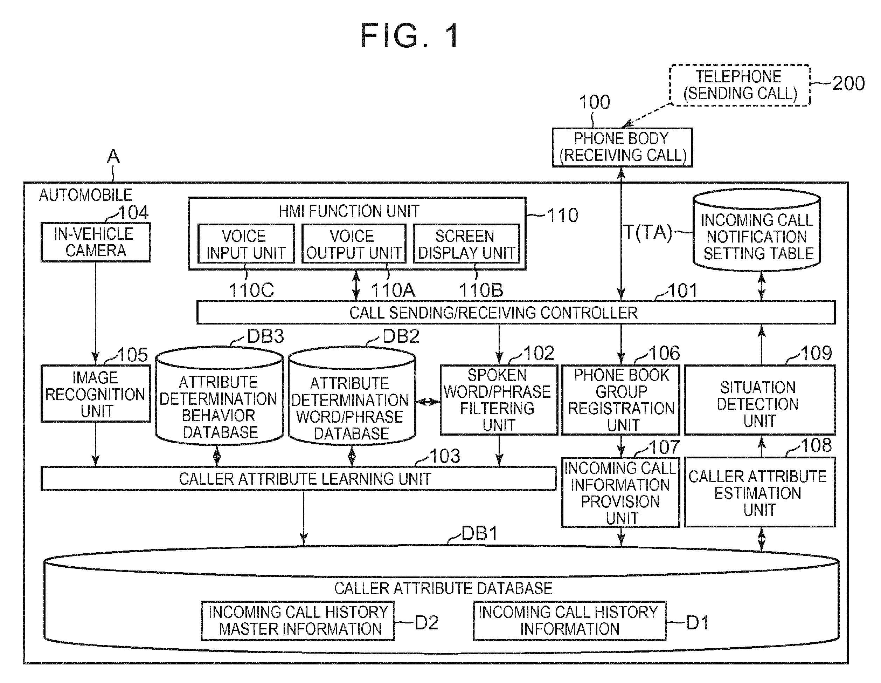

More specifically, as shown in FIG. 1, the incoming call notification control system includes a phone body 100 located within an automobile A. The phone body 100 serves as a call sending/receiving unit with which the driver sends and receives phone calls to and from a telephone 200 as a call originator or originating station. For example, the phone body 100 is a cellular phone terminal possessed by the driver. When the phone body 100 receives a phone call from the telephone 200 as a call originator, it wirelessly transmits an incoming call signal indicative of receipt of the call, along with a caller number, to the automobile A, via a short-range wireless communication, or the like.

The automobile A includes a call sending/receiving controller 101 that communicates various types of information including the above-mentioned incoming call signal and caller number, with the phone body 100. When the call sending/receiving controller 101 receives an incoming call signal from the phone body 100, it also functions as an incoming call notification controller that controls execution/non-execution of the incoming call notification.

To control execution/non-execution of incoming call notification, the call sending/receiving controller 101 uses attributes of callers stored in a caller attribute database DB1. The callers are classified based on their attributes each time the driver talks with each of the callers over the phone body 100. The caller attribute is an attribute relevant to the importance of phone calls between the caller and the driver. In this embodiment, the caller attribute is either an official attribute indicating that the caller is a person with whom the driver needs to be polite during conversation, or a private attribute indicating that the caller is a person with whom the driver can casually talk without being so polite or careful about speaking.

In this embodiment, whether the caller attribute is the official attribute or the private attribute is determined using the result of analysis of the content of phone calls or conversations. The content of a phone call or conversation is analyzed based on the frequency of appearance of particular words or phrases contained in the phone conversation. The particular words or phrases are those presumed to be used at a high frequency when the caller attribute is each of the official attribute and the private attribute, and these words/phrases are managed in an attribute determination word/phrase database DB2, along with evaluation values used for classification of callers based on the attributes.

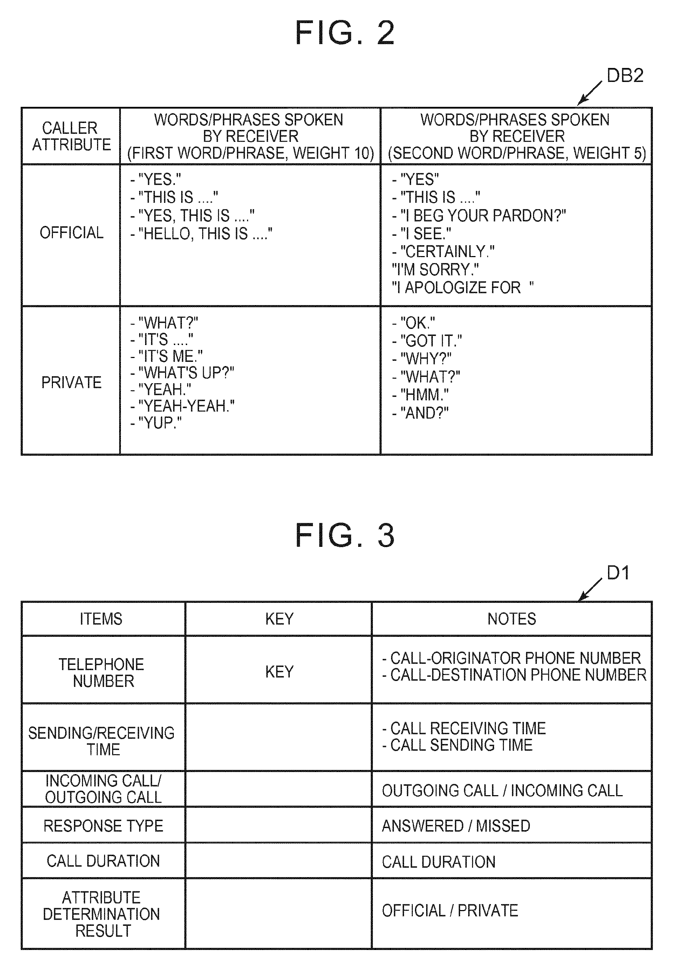

In an example shown in FIG. 2, various words or phrases that often appear as a first word or phrase at the beginning of a polite or courteous conversation are listed as particular words or phrases based on which it is determined whether the caller attribute is the official attribute. For these first words and phrases, an evaluation value "10" is set for weighting. Also, various words or phrases that often appear as a second word or phrase following the first word or phrase in a polite conversation are listed as particular words or phrases based on which it is determined whether the caller attribute is the official attribute. For these second words or phrases, an evaluation value "5" is set for weighting. On the other hand, in the example shown in FIG. 2, various words or phrases that often appear as a first word or phrase at the beginning of a casual conversation are listed as particular words or phrases based on which it is determined whether the caller attribute is the private attribute. For these first words and phrases, an evaluation value "10" is set for weighting. Also, various words or phrases that often appear as a second word or phrase following the first word or phrase in a casual conversation are listed as particular words or phrases based on which it is determined whether the caller attribute is the private attribute. For these second words or phrases, an evaluation value "5" is set for weighting.

Then, as shown in FIG. 1, in order to analyze the frequency of appearance of the particular words or phrases, the call sending/receiving controller 101 outputs a voice signal received from the phone body 100 during a call, to a spoken word/phrase filtering unit 102. The spoken word/phrase filtering unit 102 has a voice-recognition function, and performs voice recognition processing on the voice signal received from the call sending/receiving controller 101, so as to convert the content of the phone call into text data. Also, the spoken word/phrase filtering unit 102 determines whether the first word/phrase that appears at the beginning of the text data resulting from the conversion, and the second word/phrase following the first word/phrase, are included in the corresponding sets of the particular words/phrases, referring to the attribute determination word/phrase database DB2, and outputs the result of the determination to a caller attribute learning unit 103 when the first and second words/phrases are included in the particular words/phrases.

When the caller attribute learning unit 103 receives the result of the determination from the spoken word/phrase filtering unit 102, it reads the evaluation value of each of the corresponding words or phrases from the attribute determination word/phrase database DB2, and calculates a total value of the evaluation values thus read. Namely, the caller attribute learning unit 103 manages the words/phrases used in connection with the relationship between the driver and the caller, along with the corresponding evaluation values, in the attribute determination word/phrase database DB2, and adds an evaluation value to the total value each time a word/phrase included in the words/phrases managed in the database DB2 appears in a phone conversation. For example, when both of the first word/phrase and the second word/phrase that appear at the beginning of text data belong to the particular words/phrases corresponding to the official attribute, the evaluation value "10" of the official attribute corresponding to the first word/phrase, and the evaluation value "5" of the official attribute corresponding to the second word/phase, are added up, and a total value "15" of the official attribute is calculated. Also, when both of the first word/phrase and the second word/phrase that appear at the beginning of text data belong to the particular words/phrases corresponding to the private attribute, the evaluation value "10" of the private attribute corresponding to the first word/phrase, and the evaluation value "5" of the private attribute corresponding to the second word/phrase, are added up, and a total value "15" of the private attribute is calculated. Also, when the first word/phrase that appears at the beginning of text data belongs to the particular words/phrases corresponding to the official attribute, while the second word/phrase belongs to the particular words/phrases corresponding to the private attribute, the evaluation value "10" of the official attribute corresponding to the first word/phrase is calculated as a total value of the official attribute, and the evaluation value "5" of the private attribute corresponding to the second word/phrase is calculated as a total value of the private attribute.

Also, when classifying callers in categories of the official attribute and the private attribute, the caller attribute learning unit 103 takes account of the behavior of the driver during a phone call, as well as the result of analysis of the phone-call content. For analysis of the behavior of the driver, an in-vehicle camera 104 captures an image of a region within the vehicle interior including the driver, during the phone call, and outputs the captured image information to image recognition unit 105. The image recognition unit 105 performs image recognition processing, such as pattern recognition processing, on the image information received from the in-vehicle camera 104, so as to detect the behavior of the driver. For example, the image recognition unit 105 extracts a region corresponding to the head of the driver, from the image information received from the in-vehicle camera 104, through the image recognition processing, and analyzes the movement of the head thus extracted, so as to detect a bowing action of the driver as the behavior of the driver. The bowing action of the driver means that the driver shows his/her respect for the caller, and the caller is presumed to be a person with whom the driver needs to be polite or courteous in a conversation.

Once the caller attribute learning unit 103 receives the detection result concerning the behavior of the driver from the image recognition unit 105, it determines whether the behavior of the driver thus detected is set in advance as an element that contributes to classification based on the official attribute and the private attribute, while referring to an attribute determination behavior database DB3. In the attribute determination behavior database DB3, the behaviors presumed to be taken on by the driver at a high frequency when the attribute of the caller is each of the official attribute and the private attribute are managed, along with evaluation values used for classification of callers based on the attributes. For example, the bowing action of the driver as described above is a behavior presumed to be taken on by the driver at a high frequency when the attribute of the caller is the official attribute; therefore, an evaluation value of the official attribute corresponding to this behavior of the driver is set for weighting.

When the detected behavior of the driver is an element that contributes to classification based on the official attribute and the private attribute, the caller attribute learning unit 103 reads an evaluation value corresponding to the driver's behavior from the attribute determination behavior database DB3, and adds the evaluation value thus read to the evaluation value of the caller attribute based on the frequency of appearance of the particular words/phrases as described above. Also, the caller attribute learning unit 103 compares the magnitudes of the evaluation values calculated for the respective caller attributes, and determines the caller attribute having a relatively high evaluation value, as the attribute of the caller engaged in the phone call in question. Namely, the caller attribute learning unit 103 determines the attribute of the caller engaged in the phone call, based on the relative magnitude of the total value of the evaluation values. Then, the caller attribute learning unit 103 stores the determination result of the attribute of this caller, as incoming call history information D1, in the caller attribute database DB1. Namely, the caller attribute database DB1 functions as "storage unit" that stores the attribute of each caller, and the caller attribute learning unit 103 functions as "learning unit" that mainly classifies the callers based on the attributes, and stores the attributes of the callers in the caller attribute database DB1.

As in an example shown in FIG. 3, the incoming call history information D1 contains various types of information, such as a telephone number, call sending or receiving time, type of phone call (incoming call or outgoing call), type of response, and the call duration, as well as the determination result of the attribute of the caller as described above. The telephone number is information indicating a telephone number of an originator of a call when the call is an incoming call, or information indicating a telephone number of a destination of a call when the call is an outgoing call. The call sending/receiving time is information indicating the call receiving time when the call is an incoming call, or information indicating the call sending time when the call is an outgoing call. The type of phone call is information indicating an incoming call when the call in question is an incoming call, or information indicating an outgoing call when the call is an outgoing call. The type of response is information indicating whether a response has been made to incoming call notification. The call duration is information indicating a length of time required to complete a call no matter whether the call is an incoming call or an outgoing call. These types of information are managed in the caller attribute database DB1 such that they are associated with one another, using information of the telephone number as a key.

As shown in FIG. 1, in order to acquire the above-indicated incoming call history information D1, the call sending/receiving controller 101 outputs the caller number received from the phone body 100 at the time of a phone call, to a phone book group registration unit 106. The phone book group registration unit 106 specifies the caller, referring to phone book data registered in advance, based on the caller number received from the call sending/receiving controller 101. The call sending/receiving controller 101 also outputs various types of information, such as the call sending/receiving time, type of call (incoming or outgoing call), type of response, and the call duration, received from the phone body 100 at the time of the call, along with the caller number, to the phone book group registration unit 106. These various types of information is transmitted, along with the caller information and the caller number, from the phone book group registration unit 106 to an incoming call information provision unit 107. Also, if a registered group name, such as "office-related" or "family", and a registered image are registered, in association with the caller information, in the phone book data, for example, the registered group name and the registered image are also transmitted from the phone book group registration unit 106 to the incoming call information provision unit 107. Then, the incoming call information provision unit 107 stores the above-indicated various types of information received from the phone book group registration unit 106, which is associated with the caller number also received from the unit 106, in the caller attribute database DB1, as incoming call history information D1. Also, the incoming call information provision unit 107 stores the caller information, registered group name, and the registered image received from the phone book group registration unit 106, which are associated with the caller number also received from the unit 106, in the caller attribute database DB1, as incoming call history master information D2. In this sense, the incoming call information provision unit 107 also functions as a part of the above-indicated "learning unit".

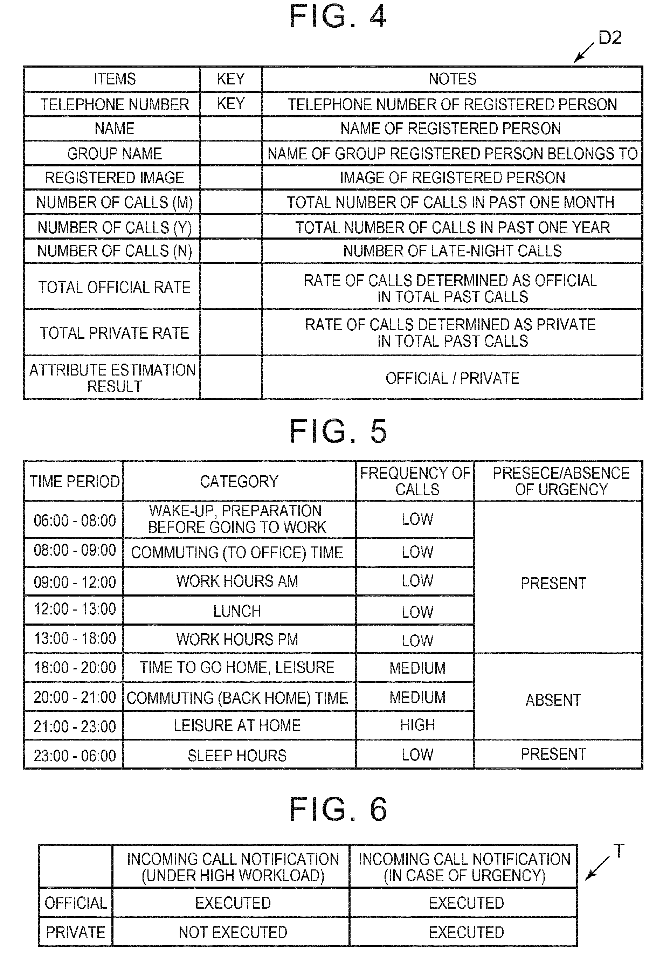

As in an example shown in FIG. 4, the incoming call history master information D2 is statistical data concerning phone calls that have been carried out by the driver via the phone body 100 so far. The incoming call history master information D2 is updated by the caller attribute learning unit 103, based on the incoming call history information D1 accumulated in the caller attribute database DB1 each time a phone call is carried out. The incoming call history master information D2 also contains various types of information, such as the number of phone calls, total official rate, total private rate, and the attribute estimation result, as well as the caller number (telephone number), caller information (name), registered group name, and the registered image received from the incoming call information provision unit 107 as described above. The number of phone calls is information representing the total number of phone calls that have been carried out with the caller in question so far, and is managed while being distinguished with respect to respective target periods, such as the past one month and the past one year. Also, the number of phone calls is managed while being distinguished with respect to respective target times of day, such as late night hours. The total official rate is information representing the rate of phone calls determined as those indicating the official attribute, among all of the past calls, and is calculated based on the attribute determination results of the incoming call history information D1 accumulated in the caller attribute database DB1. The total private rate is information representing the rate of phone calls determined as those indicating the private attribute, among all of the past calls, and is similarly calculated based on the attribute determination results of the incoming call history information D1 accumulated in the caller attribute database DB1. The attribute estimation result is information representing the attribute of the caller based on the statistical data, and is calculated based on the relationship in magnitude between the total official rate and the total private rate. Namely, the attribute estimation result provides information indicating that the attribute of the caller is the official attribute when the total official rate is larger than the total private rate. On the other hand, the attribute estimation result provides information indicating that the attribute of the caller is the private attribute when the total private rate is larger than the total official rate. These items of information are managed in the caller attribute database DB1 such that they are associated with one another, using the information of the telephone number as a key.

Then, as shown in FIG. 1, when the call sending/receiving controller 101 controls execution of incoming call notification, the caller attribute estimation unit 108 retrieves the corresponding incoming call history master information D2 from the caller attribute database DB1, based on the telephone number of the telephone 200 as the call originator. Also, the caller attribute estimation unit 108 estimates the attribute of the caller as the call originator, based on the attribute estimation result of the retrieved incoming call history master information D2. Namely, if the attribute estimation result of the retrieved incoming call history master information D2 is the official attribute, the caller attribute estimation unit 108 estimates that the attribute of the caller as the call originator is the official attribute. On the other hand, if the attribute estimation result of the retrieved incoming call history master information D2 is the private attribute, the caller attribute estimation unit 108 estimates that the attribute of the caller as the call originator is the private attribute. Then, the caller attribute estimation unit 108 outputs the estimation result of the attribute of the caller as the call originator, to a situation detection unit 109.

The situation detection unit 109 detects a workload status of the driver at the time when the call sending/receiving controller 101 controls execution of informing call notification. Examples of situations where the driver is in a high-workload status include a driving situation where the automobile is being driven or operated, a traveling situation where the accelerator pedal or brake pedal is depressed and the automobile is being accelerated or decelerated, and a traveling situation where a particular attention needs to be paid, such as when the automobile is traveling along a curve, for example. In these cases, the situation detection unit 109 is able to detect the driving situation where the automobile is being driven or operated when the ignition switch of the automobile A is in the ON state, for example, and detect the traveling situation where the automobile is being accelerated or decelerated, based on the output of an accelerator pedal position sensor, a brake sensor, or an acceleration sensor, for example. Also, the situation detection unit 109 is able to detect a traveling situation where the automobile is traveling along a curve, by using the current position of the automobile obtained via a GPS (global positioning system) in combination with a map database, or based on the output of a sensor that detects the steering angle of the steering wheel, for example. Then, the call sending/receiving controller 101 determines the workload status of the driver, based on the driving situation or traveling situation of the automobile detected by the situation detection unit 109 as described above.

Also, the situation detection unit 109 detects the urgency of a phone call, as well as the workload status of the driver. Here, the urgency of the call is detected based on the time periods in which past phone calls tended to be received from the caller. The caller attribute learning unit 103 stores the time periods in which past phone calls tended to be received from the caller, along with the attribute of the caller, in the caller attribute database DB1.

FIG. 5 shows one example of correspondence among a life pattern that lists routine activities of a given caller which are predicted for respective time periods, the frequency of calls from the caller in each time period (according to the incoming call history master information D2), and the presence or absence of urgency determined based on the frequency of the calls. The table of FIG. 5 is stored in the situation detection unit 109. In the example shown in FIG. 5, the situation detection unit 109 detects or regards a call made in any of a time period (6:00 - 18:00) from early morning to evening, and a time period (23:00 - 6:00) of late night hours as a call having some urgency, since the frequency of calls from the caller in these time periods is small. On the other hand, the situation detection unit 109 detects or regards a call in a time period (18:00 - 23:00) from evening to late night as a call with no urgency, since the frequency of calls from the caller in this time period is medium or high, and it determines that the time period is a normal or regular call time. The frequency of calls from each caller may be individually managed for the caller, or may be managed as part of statistical data concerning all callers.

As shown in FIG. 1, the workload status of the driver and the urgency of the call thus detected are transmitted from the situation detection unit 109 to the call sending/receiving controller 101, along with the estimation result of the caller attribute received from the caller attribute estimation unit 108. Then, the call sending/receiving controller 101 controls execution of incoming call notification with reference to an incoming call notification setting table T, based on the estimation result of the caller attribute, the workload status of the driver, and the urgency of the call, which are received from the situation detection unit 109. Namely, the call sending/receiving controller 101 controls execution/non-execution of incoming call notification to the driver, according to the attribute of the caller stored in the caller attribute database DB1, and the situation under which the driver is placed. In this case, when the driver is placed in a high-workload status, the call sending/receiving controller 101 controls execution of incoming call notification such that incoming call notification is less likely or unlikely to be performed.

In an example shown in FIG. 6, whether or not incoming call notification is to be executed is individually set in the incoming call notification setting table T for each attribute of the caller, for the case where the driver is placed in a high-workload status. In the example shown in FIG. 6, even if the driver is placed in a high-workload status, the call sending/receiving controller 101 is set or configured to execute incoming call notification when the attribute of the caller is the official attribute. This setting is based on a judgement that a prompt response is often required to a phone call from a person, such as a client, customer, or a boss, who is officially related to the driver, and the call should be immediately answered. On the other hand, in the example shown in FIG. 6, when the driver is placed in a high-workload status, the call sending/receiving controller 101 is set or configured not to execute incoming call notification if the attribute of the caller is the private attribute. This setting is based on a judgement that a phone call from a person, such as a friend or a family member, who has a private relationship with the driver is often used for regular communication, and there would be no problem even if the driver calls back later.

In the example shown in FIG. 6, whether or not incoming call notification of a phone call is to be executed is set for each attribute of the caller, for the case where the driver is placed in a high-workload status, and the phone call is an urgent call. In the example shown in FIG. 6, if the phone call is an urgent call, the call sending/receiving controller 101 is set or configured to exceptionally execute incoming call notification even if the attribute of the caller is the private attribute. Namely, the degree of priority of execution of incoming call notification can be varied according to the urgency of the incoming call based on the time periods of the past calls stored in the caller attribute database DB1, and the time period in which the phone body 100 receives the call. Thus, incoming call notification is more likely to be executed for phone calls having a high level of urgency; for example, incoming call notification is permitted in case of an emergency, even under a situation where incoming call notification is normally restrained or inhibited.

The setting of execution or non-execution of incoming call notification in relation to the attribute of the caller may be different from that of the example shown in FIG. 6. Namely, when the attribute of the caller is the private attribute, the system may be set to execute incoming call notification even if the driver is placed in a high-workload status. This setting is based on a judgement that there would be no problem even if the driver casually or easily answers a phone call from a person, such as a friend or a family member, having a private relationship with the driver, so as to urge the caller to call again later. On the other hand, when the driver is placed in a high-workload status, the system may be set not to execute incoming call notification if the attribute of the caller is the official attribute. This setting is based on a judgement that a phone call from a person, such as a client, customer, or a boss, having an official relationship with the driver needs to be handled with politeness or courtesy, and the call should be answered after the situation gets better or the driver is well-prepared to answer the call.

Namely, there are certain reasonable grounds for any of the setting of execution/non-execution of incoming call notification in relation to the attribute of the caller as shown in the example of FIG. 6, and other settings different from that of the example of FIG. 6. Therefore, the driver is able to change setting of the incoming call notification setting table T, in view of the need of the driver himself/herself.

As shown in FIG. 1, when the call sending/receiving controller 101 executes incoming call notification, the incoming call notification is carried out through an HMI (human-machine interface) function unit 110. In this case, the HMI function unit 110 produces voice or audio output for incoming call notification via a voice output unit 110A, or provides a screen display for incoming call notification via a screen display unit 110B. Also, the HMI function unit 110 receives the driver's intention as to whether to answer the call in response to the incoming call notification, through voice operation performed by the driver via a voice input unit 110C.

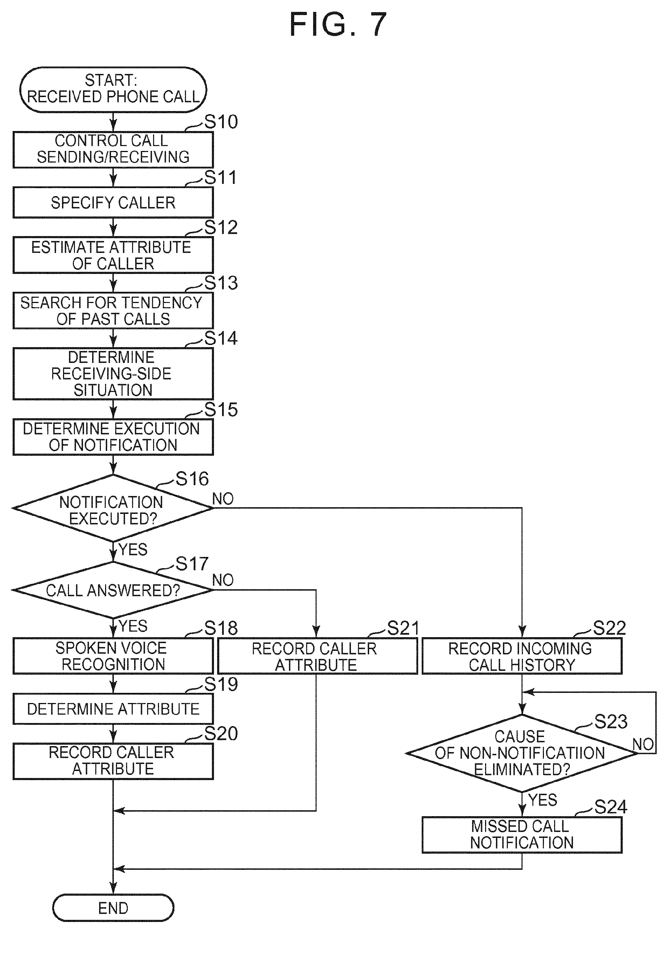

Next, a specific procedure of an incoming call notification control routine executed by the incoming call notification control system of this embodiment will be described. As shown in FIG. 7, when the phone body 100 receives a phone call from the telephone 200 as the originator of the call, the incoming call notification control system starts control of execution of incoming call notification via the call sending/receiving controller 101 (step S10).

To control execution/non-execution of incoming call notification as described above, the incoming call notification control system initially specifies the caller via the call sending/receiving controller 101, referring to the phone book data, based on the caller number received from the phone body 100.

Subsequently, the incoming call notification control system reads an attribute estimation result of the incoming call history master information D2 (FIG. 4) associated with the caller number as a key, from the caller attribute database DB1, based on the caller number received from the phone body 100. Then, the incoming call notification control system estimates the attribute indicated by the attribute estimation result thus read, as the attribute of the caller as the originator of the call, via the caller attribute estimation unit 108 (step S12).

Then, the incoming call notification control system makes a search for a time period or periods in which past phone calls tended to be received from the caller, and detects the urgency of the call in question, based on the time periods of the past phone calls thus searched, via the situation detection unit 109 (step S13).

Subsequently, the incoming call notification control system detects (determines) the workload status of the driver as a call-receiving-side status, via the situation detection unit 109 (step S14). Then, the incoming call notification control system determines whether or not incoming call notification is to be executed via the call sending/receiving controller 101 (step S15), referring to the incoming call notification setting table T (FIG. 6), based on the attribute of the caller estimated in the above step S12, the urgency of the call detected in the above step S13, and the workload status of the driver detected in the above step S14. Then, when the incoming call notification control system determines that incoming call notification is to be executed (step S16=YES), it executes incoming call notification according to the affirmative decision in step S16.

Also, the incoming call notification control system determines whether the call was answered in response to the incoming call notification, via the voice input unit 110C (step S17). Then, when the call was answered via the voice input unit 110C (step S17=YES), the incoming call notification control system performs voice recognition processing on the voice signal received from the phone body 100 after the call was answered, via the spoken word/phrase filtering unit 102, and converts the content of the call into text data (step S18).

Subsequently, the incoming call notification control system reads evaluation values of the words/phrases included in the text data resulting from the conversion, from the attribute determination word/phase database DB2, and determines the attribute of the caller via the caller attribute learning unit 103, using a total value of the evaluation values thus read (step S19). Also, the incoming call notification control system stores (records) the determination result of the attribute of the caller in the caller attribute database DB1 as the incoming call history information D1 (FIG. 3) (step S20), and finishes the incoming call notification control routine illustrated in FIG. 7.

On the other hand, when the call was not answered in response to the incoming call notification via the voice input unit 110C, namely, when the driver refused to answer the call through his/her intentional operation (step S17=NO), the incoming call notification control system stores (records) information indicating the driver's refusal to answer the call, in association with the attribute of the caller, in the caller attribute database DB1, via the caller attribute learning unit 103 (step S21), and then finishes the incoming call control routine illustrated in FIG. 7. Thereafter, if the phone body 100 receives a phone call from the same caller, the call sending/receiving controller 101 is less likely or unlikely to execute incoming call notification to the driver, under a condition that the attribute of the caller is associated with the information that the driver refused to answer the call from the same caller.

When the incoming call notification control system determines that incoming call notification is not to be executed (step S16=NO), the system does not execute the notification according to the negative decision, and records history information indicating that there was an incoming call, via the call sending/receiving controller 101 (step S22). The non-execution of incoming call notification may be performed in a mode in which rejection of the incoming call is automatically performed against the caller, and the phone line is cut, or in a mode in which only the notification to the driver is not performed while the call is kept being received.

Then, the incoming call notification control system waits until the cause of non-execution of incoming call notification is eliminated (step S23). For example, if the cause of non-execution is that the driver is in the middle of driving operation and is placed in a high-workload status, the system waits until the driving operation ends. Also, if the cause of non-execution is that the automobile is traveling on a curve, and the driver is placed in a high-workload status, the system waits until the curve traveling ends. Then, if the incoming call notification control system determines that the cause of non-execution of incoming call notification has been eliminated, namely, that the driver has got out of the high-workload status (step S23=YES), the system notifies the driver of the presence of a missed incoming call, via the call sending/receiving controller 101 (step S24), and then finishes the incoming call notification control routine illustrated in FIG. 7.

Next, the operation of the incoming call notification control system of this embodiment will be described. When execution/non-execution of incoming call notification is controlled, it is known to uniformly restrict notification of incoming calls from particular callers, using a blacklist, or the like. However, incoming call notification, which is normally permitted, may be restricted only when the driver is placed in a special situation, such as a situation where he/she must concentrate on driving during driving operation or curve traveling. Namely, the need to execute incoming call notification varies depending on the situation of the driver when he/she receives the call, as well as the relationship between the caller and the driver.

In this respect, according to this embodiment, execution/non-execution of incoming call notification is controlled, in view of both of the attribute of the caller representing the relationship between the caller and the driver, and the situation in which the driver is placed. Namely, on the basis of conditions set in the incoming call notification setting table T by the driver in view of his/her own needs, execution/non-execution of incoming call notification when the driver is placed in a special situation is controlled for each attribute of the caller. Consequently, incoming call notification control that takes account of the situation or status of the driver as well as the caller attribute is realized.

Also, in this embodiment, data sorted each time the driver makes a phone call via the phone body 100 and accumulated in the caller attribute database DB1 is used for determining the attribute of the caller used in the incoming call notification control. Therefore, the driver does not need to newly set the attribute of the caller for use in the incoming call notification control, and the convenience or user-friendliness of the system is thus enhanced.

As described above, the following effects can be obtained according to the first embodiment as described above. (1) The call sending/receiving controller 101 controls execution/non-execution of incoming call notification to the driver, taking account of the attribute of the caller determined via the caller attribute learning unit 103, and the situation where the driver is placed when receiving the call, at the same time. Therefore, the system is able to control execution of incoming call notification according to the situation or status of the driver upon receipt of each call, without requiring the driver himself/herself to set the attribute of the caller each time, thus assuring naturally enhanced convenience or user-friendliness.
(2) The caller attribute learning unit 103 stores the time period(s) in which past phone calls were received from each caller, as well as the attribute of the caller, in the caller attribute database DB1, and the call sending/receiving controller 101, when controlling execution of incoming call notification, makes the degree of priority of incoming call notification variable according to the time period(s) stored in the caller attribute database DB1, and the time period in which the phone body 100 receives the phone call in question. Therefore, if a time period in which a phone call is received from a certain caller largely deviates from the time period(s) stored in the caller attribute database DB1, the incoming call notification to the driver is controlled in view of the urgency of the phone call, e.g., a high degree of urgency. Thus, incoming call notification is more likely to be executed for incoming calls having high urgency, for example, while the situation in which the driver is placed upon receipt of the call is taken into consideration; thus, the practicability in addition to the convenience is enhanced.
(3) The call sending/receiving controller 101 determines the situation in which the driver is placed, according to traveling conditions of the automobile or driving conditions. Namely, when the driver is in a driving condition where he/she is driving the automobile, or when the automobile is traveling in a traveling environment where it is difficult for the driver to drive the automobile, the driver is presumed to be in a condition where he/she feels a high workload or burden. Therefore, the situation in which the driver is placed is determined such that it corresponds to the driving condition or traveling condition of the automobile. Then, the call sending/receiving controller 101 controls execution of incoming call notification, such that it is more likely to restrain or inhibit incoming call notification as the driver is placed in a higher-workload status, based on the result of the above determination. Namely, when the driver is placed in a high-workload status, such as when the driver is driving the automobile, or the automobile is traveling on a curve, the incoming call notification itself, not to mention a phone talk or conversation, may cause the driver to be bothered or disturbed. Thus, under these situations, the incoming call notification to the driver is highly likely to be restrained or inhibited. In this manner, the driver may feel less bothered or disturbed.
(4) When the call sending/receiving controller 101 determines that the driver has got out of the high-workload status, it informs the driver that there is a missed incoming call. Namely, once the driver gets out of the high-workload status, incoming call notification is not likely to cause the driver to feel bothered or disturbed any longer. Therefore, by informing the driver of the presence of the missed incoming call under this situation, the convenience or user-friendliness will be maintained for the driver who senses the importance of phone calls.
(5) The caller attribute learning unit 103 analyzes the content of past phone calls of the driver, based on the frequency of appearance of words or phrases contained in phone conversations. Namely, if the relationship between the driver and the caller is different, the words or phrases contained in phone conversations between the driver and the caller are usually different. Therefore, by analyzing the frequency of appearance of certain words/phrases contained in the phone conversions, it is possible to determine whether the relationship between the driver and the caller is an official relationship, or a private relationship, for example, and thus classify callers based on their attributes.
(6) The caller attribute learning unit 103 manages the words or phrases used in connection with the relationship between the driver and the caller, along with corresponding evaluation values, in the attribute determination word/phrase database DB2. The caller attribute learning unit 103 adds an evaluation value each time any of listed words or phrases appears in a phone conversation, and determines the attribute of the caller in the call, based on the relative magnitude of the total value of the evaluation values. Therefore, it is possible to further enhance the classification accuracy, and the learning accuracy, by determining the attribute of the caller in view of the phone conversation over a certain length of time.
(7) The caller attribute learning unit 103 takes account of the behavior of the driver during a phone call, for classification of callers based on attributes. Namely, when the driver performs a bowing action during a phone call, it is presumed that the driver shows respect for the caller, and the caller is a person having an official relationship with the driver. Therefore, if the behavior of the driver during the call, as well as the words/phrases used in the call, is taken into consideration, the accuracy in classification of callers based on attributes, and the learning accuracy, can be further enhanced.
(8) When the driver refuses to answer an incoming call through his/her intentional operation, the caller attribute learning unit 103 stores the information about the refusal, in association with the attribute of the caller, in the caller attribute database DB1. When the phone body 100 receives a phone call from the same caller, the call sending/receiving controller 101 restrains or inhibits execution of incoming call notification to the driver, under a condition that the attribute of the caller is associated with the information that the driver refused to answer the previous call. Namely, in view of the fact that the driver refused to answer a phone call from a given caller, notification of subsequent incoming calls from the same caller is less likely or unlikely to be executed. Therefore, the system is able to control execution/non-execution of incoming call notification to the driver, in view of individual circumstances of the driver.

Next, an incoming call notification control system according to a second embodiment of the invention will be described with reference to the drawings. The second embodiment is different from the first embodiment in that callers classified based on their attributes are further classified based on the registered group names of the callers set in advance as phone book groups. Accordingly, in the following description, the configuration of the system different from that of the first embodiment will be mainly described, and the configuration that is identical with or corresponds to that of the first embodiment will not be repeatedly described.

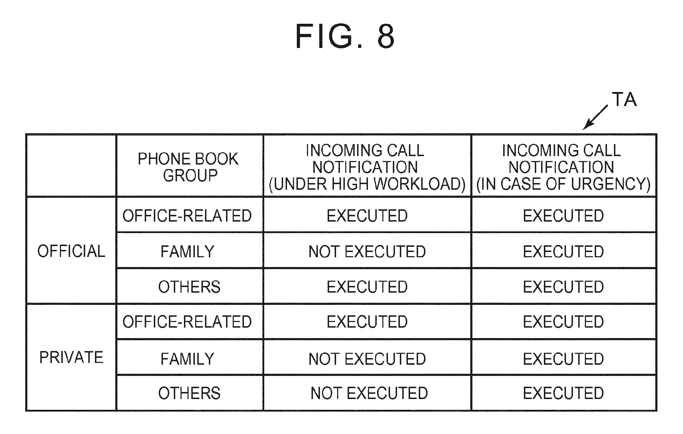

As shown in FIG. 8 that corresponds to FIG. 6, in the incoming call notification setting table TA of this embodiment, whether or not incoming call notification is to be executed is individually set for respective groups of callers set in advance as phone book groups, into which the callers with each attribute are further classified, with respect to the case where the driver is in a high-workload status, and the case where the phone call is an urgent call. Then, the call sending/receiving controller 101 controls execution or non-execution of incoming call notification to the driver, with different priorities placed on the respective groups into which the callers with each attribute are further classified. In the example shown in FIG. 8, when a certain caller is registered in advance in a group named "office-related" set in phone book data, the system is set or configured to execute incoming call notification when the driver is in a high-workload status, not only in the case where the attribute of the caller is the official attribute, but also the case where it is the private attribute. This setting is based on a judgement that if the driver registers the caller in the group named "office-related" according to his/her own intention, this intention should be respected, and a phone call from any person having an official relationship should be immediately answered even if the attribute of the caller determined based on the content of past phone calls of the driver is the private attribute. On the other hand, in the example shown in FIG. 8, when a certain caller is registered in advance in a group named "family" set in the phone book data, the system is set or configured not to execute incoming call notification when the driver is in a high-workload status, not only in the case where the attribute of the caller is the private attribute, but also the case where the attribute of the caller is the official attribute. This setting is also based on a judgement that if the driver registers the caller in the group named "family" according to his/her intention, this intention should be respected even if it is determined based on the content of past phone calls of the driver that the attribute of the caller is the official attribute, and the driver can call back later in response to a phone call from any person having a private relationship, without causing any problem. Also, when a certain caller is registered in advance in a group having a name other than "office-related" and "family" and set in the phone book data, or the caller is not registered in any group in the phone book data, execution/non-execution of incoming call notification is set, depending upon whether the attribute of the caller is the official attribute or the private attribute, under the same conditions as those of the first embodiment. As in the first embodiment, the setting of execution/non-execution of incoming call notification in relation to the attribute of the caller may be different from that of the example shown in FIG. 8, in view of the needs of the driver himself/herself. Also, as in the first embodiment, even when the callers classified based on the attributes are further classified into the groups as described above, classification of the callers based on the attributes and registration of the callers in the groups are performed via the caller attribute learning unit 103 in the manner as illustrated above in FIG. 4.

According to the second embodiment as described above, the following effect can be obtained, in addition to the effects (1) through (8) of the first embodiment. (9) Execution/non-execution of incoming call notification to the driver is controlled with different priorities placed on respective groups into which the callers with each attribute are further classified based on the registered group names. Namely, the categories of the attributes relevant to the importance of calls between the driver and the caller are divided into sub-categories, based on the information of the registered group names, such as "office-related" and "family", set in advance. Therefore, the categories of the attributes relevant to the importance of calls between the driver and the caller are divided into sub-categories, using the information of the registered group names set in advance based on the intention of the driver, for example, in addition to the content of phone calls between the driver and the caller. Then, execution/non-execution of incoming call notification is controlled with different priorities placed on respective sub-categories into which the categories of the attributes are divided, so that the practicability is further improved.

Next, an incoming call notification control system according to a third embodiment of the invention will be described with reference to the drawings. The third embodiment is different from the first and second embodiments in that the callers are classified based on the attributes, in view of not only the content of phone calls but also the tone of the driver's voice during the calls and biological reactions of the driver during the calls. Accordingly, in the following description, the configuration of the system different from that of the first embodiment will be mainly described, and the configuration identical with or corresponding to that of the first embodiment will not be repeatedly described.

When the incoming call notification control system of this embodiment classifies callers based on their attributes, the system takes account of the result of determination as to whether the driver has a good feeling toward the caller, and the result of determination as to whether the caller is a person with whom the driver feels nervous, in addition to the result of determination as to whether the attribute of the caller is the official attribute or the private attribute.

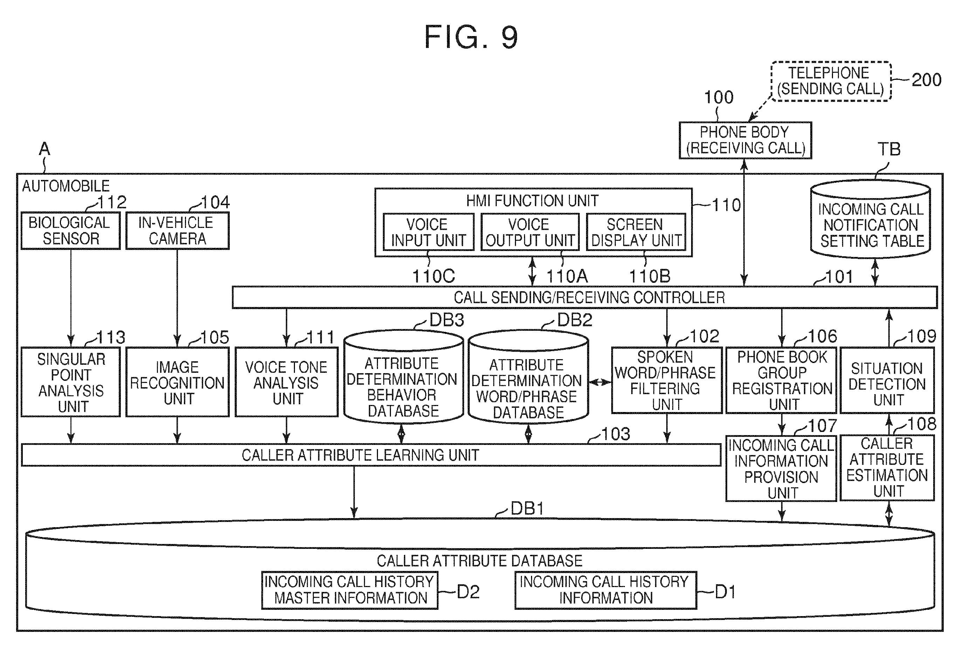

Then, as shown in FIG. 9, in order to determine the presence or absence of a good feeling, the call sending/receiving controller 101 outputs a voice signal of the driver received from the phone body 100 during a phone call, to a voice tone analysis unit 111. The voice tone analysis unit 111, which has a function of analyzing the frequency of the voice signal, determines that the tone of the driver's voice is at "high level" when the frequency of the voice signal received is equal to or higher than a given frequency, and outputs the result of the determination to the caller attribute learning unit 103. The fact that the tone of the driver's voice is at the "high level" means that the driver positively talks with the caller over the phone, and suggests that the caller is a person toward whom the driver has a good feeling or a favorable impression. On the other hand, when the frequency of the voice signal received is lower than the given frequency, the voice tone analysis unit 111 determines that the tone of the driver's voice is at "low level", and outputs the result of the determination to the caller attribute learning unit 103. The fact that the tone of the driver's voice is at the "low level" means that the driver passively talks with the caller over the phone, and suggests that the driver does not necessarily have a good feeling toward the caller. Then, the result of determination on the presence or absence of a good feeling is transmitted from the caller attribute learning unit 103 to the caller attribute database DB1, and is managed as incoming call history information D1 in the caller attribute database DB1.

To determine the presence or absence of nervousness, a biological sensor 112 detects a biological signal of the driver during a period from the time when incoming call notification is executed, for example, to the time when a call answering operation or a call rejecting operation is performed. As the biological signal, the heart rate, the frequency of blinks, the frequency of movements of the line of sight, the dilatation of the pupils, the frequency of breaths, the skin surface temperature, etc., may be used. The heart rate can be detected by a pulse monitor worn by the driver, for example, and it is suggested that the degree of nervousness is higher as the value of the heat rate is larger. Also, the frequency of blinks can be detected by performing image analysis processing on image information indicating a captured image of the driver's face, for example, and it is suggested that the degree of nervousness is higher as the frequency of blinks is higher. Similarly, the frequency of movements of the line of sight can be detected by performing image analysis processing on image information indicating a captured image of the driver's face, for example, and it is suggested that the degree of nervousness is higher as the frequency of movements is higher. Similarly, the degree of dilatation of the pupils can be detected by performing image analysis processing on image information indicating a captured image of the driver's face, for example, and it is suggested that the degree of nervousness is higher as the degree of dilatation is larger. Also, the frequency of breaths can be detected based on pressure changes sensed by a pressure-sensitive airbag provided at the driver's seat, for example, and it is suggested that the degree of nervousness is higher as the frequency of breaths is higher. Also, the skin surface temperature can be detected by a device worn by the driver, such as a thermistor incorporated in a so-called wearable device, and it is suggested that the degree of nervousness due to stress is higher as the temperature is higher. Then, a singular point analysis unit 113 compares sensor values received from the biological sensor 112 with a value of normal time, and extracts sensor values that largely deviate from that of normal time, as singular points, so as to determine the presence or absence of nervousness. As the value of normal time, a sensor value obtained when the driver talks with a passenger in the vehicle, for example, or a sensor value obtained when the driver talks over the phone with a person belonging to "family" group as one of the phone book groups, or the like, may be used. The result of determination on the presence or absence of nervousness is transmitted from the caller attribute learning unit 103 to the caller attribute database DB1, and is managed as incoming call history information D1 in the caller attribute database DB1.

Then, when the call sending/receiving controller 101 controls execution of incoming call notification, the result of determination on the presence or absence of a good feeling and the result of determination on the presence or absence of nervousness are transmitted from the situation detection unit 109 to the call sending/receiving controller 101, along with the estimation result of the official attribute or private attribute received from the caller attribute estimation unit 108. Then the call sending/receiving controller 101 controls execution of incoming call notification, referring to the incoming call notification setting table TB, while further using the result of determination on the presence or absence of a good feeling and the result of determination on the presence or absence of nervousness, in addition to the estimation result of the official attribute or private attribute, the workload status of the driver, and the urgency of the call, which are received from the situation detection unit 109.

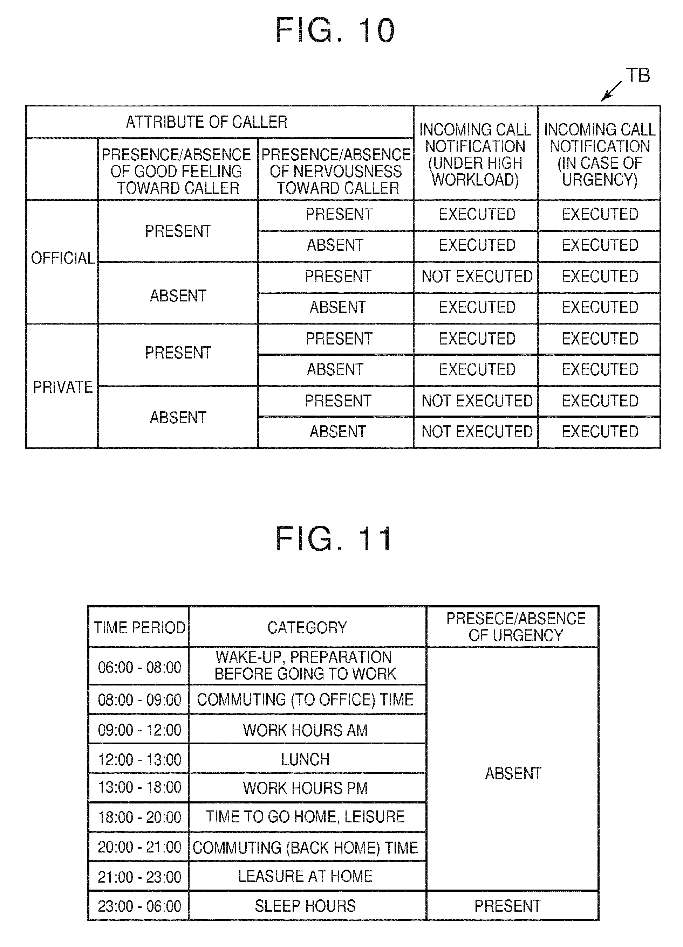

In the example shown in FIG. 10, in the incoming call notification setting table TB, whether or not incoming call notification is to be executed is individually set for each combination of the official attribute or private attribute, the presence or absence of a good feeling toward the caller, and the presence or absence of nervousness with the caller, for each of the case where the driver is placed in a high-workload status, and the case where the phone call is an urgent call. In the example shown in FIG. 10, when the driver has a good feeling toward the caller, and the driver does not feel nervous with the caller, the system is set or configured to notify the driver of the incoming call when the driver is in a high-workload status, not only in the case where the caller attribute is the official attribute but also in the case where it is the private attribute. This setting is based on a judgement that even if the phone call is from a person having a private relationship with the driver, the call should be immediately answered if the driver's intention or wish to positively talk with the caller is envisaged. Also, in the example shown in FIG. 10, when the driver does not have a good feeling toward the caller, and the driver feels nervous with the caller, the system is set or configured not to notify the driver of the incoming call when the driver is in a high-workload status, not only in the case where the caller attribute is the private attribute, but also in the case where it is the official attribute. This setting is based on a judgement that, even if the phone call is from a person having an official relationship with the driver, the call may bother or disturb the driver if the driver is expected to feel nervous when talking with the caller over the phone. Also, in the example shown in FIG 10, when the driver has a good feeling toward the caller, and the driver feels nervous with the caller, the system is set or configured to notify the driver of the incoming call when the driver is in a high-workload status, in both of the case where the caller attribute is the official attribute and the case where it is the private attribute. This setting is based on a judgement that, even if the driver feels nervous when talking with the caller over the phone, the nervousness would not bother or disturb the driver. As in the first embodiment, the setting of execution or non-execution of incoming call notification in relation to the attribute of the caller may be different from that of the example shown in FIG. 10, in view of the needs of the driver.

According to the third embodiment as described above, the following effect can be obtained, in addition to the above-described effects (1) through (8). (10) Execution or non-execution of incoming call notification to the driver is controlled with difference priorities placed on respective groups into which the callers classified based on the attributes are further classified based on the presence or absence of a good feeling toward the caller and the presence or absence of nervousness with the caller. Namely, the categories of the attributes relevant to the importance of calls between the driver and the caller are divided into sub-categories, and execution or non-execution of incoming call notification is controlled with different priorities placed on the sub-categories, so that the practicability is further improved.

The above-described third embodiment may be implemented in combination with the second embodiment as described above. Each of the above-described embodiments may be implemented in the following forms.

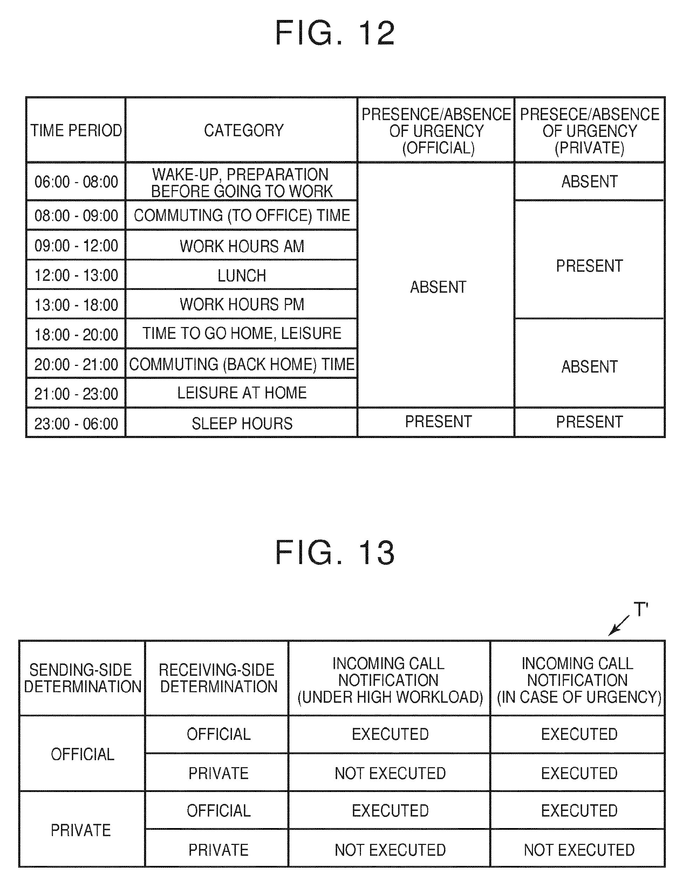

In each of the above-described embodiments, the urgency of a phone call may be uniformly detected, based on a time period in which the call is made, with no distinction of callers. In FIG. 11 corresponding to FIG. 5, one example of the correspondence between a life pattern of a given caller which lists routine activities predicted for respective time periods, and the presence or absence of urgency based on the life pattern. In the example shown in FIG. 11, the time period (23:00 - 6:00) of late night hours corresponds to time of sleep in the predicted life pattern of the caller; therefore, if a call is made in this time period, the call is detected as an urgent call. Also, detection of the urgency of a call based on the time period may be conducted, for each of the case where the attribute of the caller is the official attribute and the case where it is the private attribute. In the example shown in FIG. 12 corresponding to FIG. 5, when the attribute of the caller is the official attribute, a phone call made in the time period (23: 00 - 6:00) of late night hours is detected as an urgent call. On the other hand, when the attribute of the caller is the private attribute, not only a call made in the time period (23:00 - 6:00) of late night hours, but also a call made in the time period (8:00 - 18:00) of daytime work hours, are detected as urgent calls. This setting of conditions is based on a judgement that normally, it is difficult to anticipate a situation where a person having a private relationship with the driver makes a phone call during daytime work hours, though a person having an official relationship with the driver may make a phone call related to work, during the work hours.

In each of the above-described embodiments, the urgency of a call may be detected, in view of the day of the week on which the call is made, as well as the time period in which the call is made. In the second embodiment, an evaluation value may be set for each category of the official attribute and the private attribute, and each of registered group names set in advance as phone book groups, and execution or non-execution of incoming call notification may be controlled based on the sum of the evaluation values.

In each of the above-described embodiments, when the driver did not answer a phone call via the voice input unit 110C, in response to incoming call notification, not only the information indicating that the driver refused to answer the call, but also the situation or status of the driver at this time, may be stored in association with the attribute of the caller in the caller attribute database DB1. In this case, when a call is subsequently received from the same caller, it is preferable to determine whether execution of incoming call notification is to be restrained or inhibited in view of the situation or status of the driver at the time of receipt of the call.

In the third embodiment, since there are individual differences in the tone of voice among drivers, the tone of voice may not be determined on the basis of an absolute value of frequency set commonly for all drivers, but may be determined on the basis of a relative value of frequency individually set for each driver. If tone information of the driver's voice is collected on a routine basis, for example, the average value, or the like, of the tone information can be used as the relative value of frequency.

In the third embodiment, as biological reactions of the driver used when determining the presence or absence of nervousness, data detected after the driver is informed of the caller in the current phone call, rather than data accumulated in the caller attribute database DB1 during past phone calls with the driver, may be employed.

In the third embodiment, the tone of the driver's voice during a call and the biological reactions of the driver during a call may be used for classification based on the official attribute and the private attribute in the first embodiment and the second embodiment. In this case, an evaluation value of the official attribute or an evaluation value of the private attribute may be set in advance for each of the voice tone and the biological reactions, and the above classification may be performed with these evaluation values used for weighting. In the meantime, the behavior of the driver during a call may be used for determining the presence of a good feeling toward the caller or the presence of nervousness.

In each of the above-described embodiments, the time at which the driver is notified of the presence of a missed phone call is not limited to the time when the driver gets out of a high-workload status. For example, the above notification may be made at the time when the driver makes an inquiry about the presence of any missed call, after the driver gets out of the high-workload status.

In each of the above-described embodiments, the level of the workload of the driver's status may be set in a stepwise fashion, namely, selected from two or more levels, and execution of incoming call notification may be controlled in a manner corresponding to each of the levels. In this case, it is preferable to control execution of incoming call notification, such that incoming call notification is less and less likely to be executed as the level of the workload of the driver's status becomes higher and higher.

In each of the above-described embodiments, the phone body 100 and the call sending/receiving controller 101 may have a wired connection with each other. Also, the phone body 100 may be equipped with all of the functions of the incoming call notification control system.

In each of the above-described embodiments, the situation where execution or non-execution of incoming call notification is controlled is not limited to the time of driving of the automobile, but may be a situation selected from, for example, during boarding on a train, during a conference, in a public facility, during sleeping at night, and so forth, provided that the call itself is made via a cellular phone. In sum, the situation may be any situation under which the user may hesitate to have the phone ring or immediately answer the call depending on the caller.

In each of the above-described embodiments, the content of phone calls of the driver may be analyzed based on the context, the tone of words, etc., as well as the frequency of appearance of particular words/phrases. In each of the above-described embodiments, the attribute of the caller may be determined, based on the content of phone calls of the caller as well as the content of phone calls of the driver, referring to an incoming call notification setting table T' as shown in FIG. 13, for example. In this case, when the attribute of the caller determined based on the content of the calls of the caller and the attribute of the caller determined based on the content of the calls of the driver are different from each other, it is preferable to place more emphasis on an impression the driver has toward the caller, and give a higher priority to the attribute of the caller determined based on the content of the calls of the driver.

## Claims

1. An incoming call notification control system, comprising:
a call sending /receiving unit (100) that sends and receives a phone call to and from an operator within a mobile object;
a learning unit (103) configured to analyze a content of a past phone call of the operator with a caller via the call sending/receiving unit, and determine an attribute of the caller relevant to an importance of phone calls between the operator and the caller, based on a result of the analysis, the learning unit (103) storing the determined attribute of the caller in a storage unit (DB1); and
an incoming call notification controller (101) configured to control execution or non-execution of incoming call notification to the operator, according to the attribute of the caller stored in the storage unit, and a situation in which the operator is placed, when the call sending/receiving unit receives a phone call.

2. The incoming call notification control system according to claim 1, wherein the learning unit is configured to store a time period of the past phone call in the storage unit, and the incoming call notification controller is configured to place different degrees of priority to respective time periods, according to the stored time period, and control execution or non-execution of the incoming call notification, with a degree of priority corresponding to a time period in which the call sending/receiving unit receives the phone call.

3. The incoming call notification control system according to claim 1 or 2, wherein the incoming call notification controller is configured to control execution or non-execution of the incoming call notification such that the incoming call notification is less likely to be performed as the operator is placed in a higher-workload status.

4. The incoming call notification control system according to claim 3, wherein the incoming call notification controller is configured to determine whether the operator has got out of a high-workload status, and informs the operator that there is a missed incoming call when it is determined that the operator has got out of the high-workload status.

5. The incoming call notification control system according to any one of claims 1 to 4, wherein the learning unit is configured to analyze the content of the past phone call of the operator, based on a frequency of appearance of words or phrases included in the phone call.

6. The incoming call notification control system according to claim 5, wherein the learning unit is configured to manage the words or phrases used in connection with a relationship between the operator and the caller, along with corresponding evaluation values, the learning unit being configured to add a corresponding one of the evaluation values each time one of the words or phrases appears in the phone call, and determine the attribute of the caller relevant to the importance of phone calls between the operator and the caller, in the phone call, based on a relative magnitude of a total value of the evaluation values.

7. The incoming call notification control system according to any one of claims 1 to 6, wherein the learning unit classifies callers into categories of the attribute relevant to the importance of phone calls between the operator and each of the callers, and further into sub-categories into which the categories are divided based on groups of the callers set in advance, and the incoming call notification controller controls execution or non-execution of incoming call notification to the operator, with different degrees of priority placed on the respective sub-categories established based on the groups.

8. The incoming call notification control system according to any one of claims 1 to 7, wherein the learning unit classifies callers based on the attribute relevant to the importance of phone calls between the operator and each of the callers, in view of at least one of a tone of an operator's voice during a phone call, a behavior of the operator during the phone call, and a biological reaction of the operator during the phone call.

9. The incoming call notification control system according to any one of claims 1 to 8, wherein the learning unit stores information that the operator refused to answer a phone call from a given caller through an intentional operation of the operator, in the storage unit, in association with the attribute of the given caller, and the incoming call notification controller is configured to restrain execution of incoming call notification to the operator, when the call sending/receiving unit receives a phone call from the caller, under a condition that the attribute of the caller is associated with the information that the operator refused to answer the phone call from the caller.

10. The incoming call notification control system according to any one of claims 1 to 9, wherein the mobile object is an automobile, and the operator is a driver of the automobile, the incoming call notification controller being configured to determine the situation in which the operator is placed, according to a traveling situation or a driving situation of the automobile.
